# EUROPÄISCHE PATENTSCHRIFT

(11) **EP 1 266 797 B1**
(45) Veröffentlichungstag und Bekanntmachung des Hinweises auf die Patenterteilung: **14.11.2007**
(21) Anmeldenummer: 02012984.7
(22) Anmeldetag: 12.06.2002
(51) Int. Cl.: B60P 7/08, F16G 11/12

(54) **Ratschenzurrgurt**
Tensioning ratchet for a clamping strap
Dispositif tendeur à cliquets pour sangle d'amarrage

(30) Priorität: 13.06.2001 DE 10128600
(43) Veröffentlichungstag der Anmeldung: 18.12.2002
(73) Patentinhaber: Spanset Inter AG, CH-8618 Oetwil am See (CH)
(72) Erfinder: Mamié, André, 8810 Horgen (CH); Ehnimb, David, 8942 Oberrieden (CH)
(74) Vertreter: Tergau & Pohl Patentanwälte

(56) Entgegenhaltungen:
- EP-A- 0 634 305
- DE-A- 2 845 227
- US-A- 2 997 761
- US-A- 5 933 923

## Beschreibung

Die Erfindung betrifft einen Ratschenzurrgurt mit den Merkmalen des Oberbegriffs der Ansprüche 1 und 14. Ein derartiger Zurrgurt ist bekannt aus DE-C-28 45 227 (insbes. Fig. 3).

Bei dem bekannten Ratschenzurrgurt ist die Spannvorrichtung eine manuell betätigbare, sogenannte "Spannratsche". Das ist bevorzugt auch beim Erfindungsgegenstand der Fall. Die Festlegung des Festendes des Zurrgurtes, welches Festende dem auf die Wickeltrommel aufgewickelten Zurrende gegenüberliegt, ist dort durch zwei im Gestell ortsfest parallel nebeneinander positionierte Bolzen bewerkstelligt. Diese beiden Bolzen sind die im Oberbegriff des Anspruches 1 genannte Haltestrebe und die zu ihr parallele Stützstrebe. Beide Streben sind mit den übrigen Gestellteilen fest verbunden. Sie bilden als feste Bestandteile des Gestells mit diesem eine Einheit.

Die Fixierung des Festendes des Zurrgurtes an der vorbekannten Spannratsche ist eine Klemmfixierung. Sie vermeidet sonst übliche Nahtverbindungen zwischen Obertrum und Untertrum des den Schleifenbogen bildenden Bandbereiches und ermöglicht im Entlastungszustand eine variable Längenvoreinstellung des Zurrbandes.

Zu seiner Festlegung am Gestell wird das Fixierende des Zurrbandes in einer im Oberbegriff des Anspruches 1 beschriebenen Weise sowohl um die Haltestrebe als auch um die parallel neben ihr verlaufende Stützstrebe herumgelegt. Wegen der unveränderbar ortsfesten Fixierung beider Streben im Gestell ist das ein Einfädelungsvorgang, der vom Bedienungspersonal eine besondere Handfertigkeit und Aufmerksamkeit erfordert. Nur bei exakter Relativlage von Obertrum und Untertrum des Bandendes zur Haltestrebe und zur Stützstrebe ist eine sichere Klemmfixierung gewährleistet. Die Sicherheit dieser Klemmfixierung ist aus Gründen der Arbeitssicherheit (Personenschutz!) unverzichtbar.

Aus der US 5,933,923 ist eine Gurtschnalle zur Befestigung eines Gurtes um eine Ladung bekannt. Die Gurtschnalle weist vier parallel zueinander an einem Gestell angebrachten Stifte auf. Dabei bilden jeweils zwei Stifte ein Stiftpaar mit einem festen und einem bewegbaren Stift. Zur Befestigung des Gurtbandes wird dieses nach Art einer Schlaufe um die Stifte jeweils eines Stiftpaares herumgelegt. Das Gurtband wird dabei ausschließlich durch diese Schlaufe und die durch die Schlaufe erzeugte Reibung an der Gurtschnalle fixiert. Darüber hinaus ist für ein Vorspannen der Gurtschnalle eine zusätzliche Vorrichtung notwendig.

Die DE 88 09 854 zeigt einen Gurtanschluss am Endglied eines Spannstranges zur Sicherung von Lasten. Dabei wird das Gurtband ebenfalls schleifenartig um zwei parallele Bolzen in einem Gehäuse angeordnet. Zum Einschlaufen des Bandendes können einzelne Bolzen aus dem Gehäuse entfernt werden, wodurch sich die Handhabung dieses Gurtanschlusses stark vereinfacht. Werden Gurtbänder mit einer vergleichsweise sehr dünnen Dicke verwendet, sind als Haltestege drei achsparallele Bolzen vorgesehen. Die Fixierung des Gurtbandes erfolgt auch hier ausschließlich durch die von der Schlaufe erzeugten Reibung.

Aus der gattungsgemäßen EP-A-634 305 ist weiterhin eine Spannvorrichtung mit einem Gurt bekannt, bei welcher der Gurtanschluss am Gestell der Spannvorrichtung realisiert ist. Es sind zwei zueinander achsparallele Bolzen vorgesehen. Einer der Bolzen ist feststehend im Gestell der Vorrichtung gelagert. Der andere Bolzen ist gegenüber dem feststehenden Bolzen längsverschieblich im Gestell der Spannvorrichtung gelagert. Zur Fixierung des Gurtbandes muss das Gurtband verhältnismäßig bedienaufwändig durch die Bolzen so hindurchgezogen werden, dass sich ein Schleifenauge bildet. Sobald das Gurtband mit der Zurrspannung beaufschlagt ist, zieht das Gurtband den längsverschieblichen Bolzen in Richtung auf den feststehenden Bolzen, so dass beide Bolzen das Gurtband zwischen sich verspannend blockieren, um so die Festlagerung des Festendes des Gurtbandes zu bilden. Das bei dieser Vorrichtung erforderliche Einfädeln des Gurtendes wird als aufwändig angesehen. Eine ähnliche Fixierung des Gurtendes mit einem feststehenden und einem längsverschieblichen Bolzen zeigt schließlich die US-A-29 97 761. Zur Verbesserung der Längsverschieblichkeit des längsverschieblichen Bolzens ist dieser mit zwei abgeflachten Seiten in einer Längsnut gelagert, ohne das Einfädeln des Gurtendes zu vereinfachen.

Der Erfindung liegt die Aufgabe zugrunde, einen Ratschenzurrgurt der eingangs genannten Art so auszubilden, dass eine sichere Klemmfixierung des Festendes des Zurrgurtes am Gestell handhabungsmäßig erleichtert wird.

Diese Aufgabe wird durch einen Ratschenzurrgurt nach Anspruch 1 gelöst.

Dabei ist die Stützstrebe als separates, von der Spannvorrichtung getrenntes Bauteil ausgebildet, das mit ihren beiden Enden aus dem Schleifenauge hinaussteht und mit diesen beiden Enden am Gestell auf der der Wickeltrommel gegenüberliegenden Seite lediglich abgestützt und daher im Entlastungszustand des Zurrbandes jederzeit leicht lösbar anliegt, wobei die Stützstrebe zu der Haltestrebe eine veränderbare Distanz einnimmt. Dadurch ist nur die Haltestrebe und nicht auch die Stützstrebe fest mit dem Gestell der Spannvorrichtung verbunden. Das Herumlegen des Fixierendes des Zurrbandes um die Haltestrebe ist problemloser zu bewerkstelligen, weil der Zugang zur Haltestrebe nicht - wie bei der bekannten Spannvorrichtung - durch eine davor ortsfest fixierte Stützstrebe behindert ist. Durch den Einsatz des erfindungsgemäßen Ratschenzurrgurtes wird eine einfache und sicherer Fixierung des Festendes der Zurrgurtes ermöglicht.

Insbesondere das vorher zu einer Schleife umgelegte und daher von Hause aus schwieriger zu handhabende Fixierende des Ratschenzurrgurtes, also ihr gelegtes Schleifenauge, lässt sich einfacher um die erfindungsgemäß von außen frei und ungehindert zugängliche Haltestrebe herumlegen. Die ein separates Einzelteil bildende Stützstrebe wird problemlos erst dann in das Schleifenauge eingesetzt, also von der Seite her hindurchgeschoben, wenn das Schleifenauge bereits um die Haltestrebe herumgelegt ist. Die Form der Schleife selber kann dabei während der Befestigung der Stützstrebe angepasst werden. Erst danach wird das Zurrband am Gestell mit Hilfe der Stützstrebe fixiert. Die Distanzhaltung der Stützstrebe mit ihren beiden aus dem Schleifenauge hinausstehenden Enden gegenüber der Haltestrebe erfolgt entweder unmittelbar durch das Gestell oder mittelbar durch gesonderte Distanz-elemente grundsätzlich selbsttätig und ortsfest insbesondere unter der Zugbelastung am Zurrgurt.

Die Anlagestellung der Enden der Stützstrebe am Gestell oder allgemeiner ihre Abstützung gegenüber der Haltestrebe lässt sich durch eine Schnappverbindung zwischen den Stütz- oder Anlageteilen ebenfalls leicht lösbar sichern bzw. perpetuieren. Die Schnappverbindung kann durch einfache Formgebungsmaßnahmen am Gestell der Spannvorrichtung bewerkstelligt werden. Eine derartige Schnappverbindung ist ein geläufiges, in unterschiedlichen Ausführungsformen realisierbares Maschinenelement (Bauer, Handbuch der Verbindungstechnik, Carl Hanser Verlag München Wien, 1991, ISBN 3-446-14609-1, S. 294-324).

Der Ratschenzurrgurt nach der vorliegenden Erfindung ist einfach und kostengünstig herzustellen. Er genügt dabei höchsten Anforderungen. So werden beispielsweise Bruchfestigkeiten bis 5000 daN mit einer Standardratsche erreicht.

Das nachträgliche Einschieben der Stützstrebe in das um die Haltestrebe herumgelegte Schleifenauge wird dadurch erleichtert, dass die Stützstrebe umfänglich mit losem Spielsitz im Schleifenauge einliegt. Unter Zurrspannung nimmt die Stützstrebe dann eine Position ein, die durch die Banddicke des für den jeweiligen Ratschenzurrgurt gewählten Zurrbandes bestimmt wird, wodurch mit dem erfindungsgemäßen Ratschenzurrgurt Zurrbänder mit den unterschiedlichsten Dicken verwendet werden können.

Nach der sicheren Fixierung des Zurrbandes ist die Position der Schleife festgelegt. Das anschließende Spannen des Zurrgurtes erfolgt somit besonders sicher.

Die Sicherheit der Klemmverbindung zwischen dem Festende des Zurrgurtes und dem Gestell der Spannvorrichtung, insbesondere der Spannratsche, wird vergrößert, wenn die Haltestrebe von einer etwa hohlzylinderförmigen Hülse mit losem Spielsitz umgeben ist. Die Umfangshülse gleicht unterschiedliche Banddicken aus und liegt unter Zurrspannung fest am verklemmten Zurrband an. Dabei ist von besonderem Vorteil, wenn die Querschnittsform der Hülse unter Einfluss des unter Zurrspannung vom gedoppelten Bandbereich ausgeübten Umfangsdruckes veränderbar ist, sich mit anderen Worten der Schleife anpasst. Unter Zurrspannung nimmt die Hülse eine Querschnittsform an, wodurch ein Drehen der Umfangshülse wirksam verhindert wird. Dadurch erfolgt eine schonende Klemmung über einen größeren Flächenbereich als bei zwei unter Last nicht verformbaren Bandbolzen. Gleichzeitig wird die Klemmflächenvergrößerung noch durch den losen Spielsitz der Hülse auf der Haltestrebe begünstigt.

Die Ausbildung der beiden Enden der Stützstrebe als Lagerzapfen mit gegenüber dem Stützstrebenquerschnitt bzw. gegenüber dem Stützstrebendurchmesser reduzierter Querschnittsabmessung bzw. Zapfendurchmesser hat den Vorteil, dass die beiden vertikalen U-Schenkel des Blechteiles durch die Absätze zwischen der Stützstrebe und den endseitigen Lagerzapfen auf Distanz voneinander gehalten werden und das auch unter hoher Zurrspannung. Dadurch lässt sich ein formstabiles Gestell in kostengünstiger Weise durch verformtes Blech herstellen, auch wenn die Spannvorrichtung für hohe Zurrkräfte eingesetzt werden soll. Die separate, von Hause aus lose Stützstrebe hat dadurch nicht nur eine wichtige Funktion für die Sicherstellung der Klemmung des Zurrendes des Zurrgurtes sondern auch für die Formstabilisierung des Gestells der Spannvorrichtung.

Die weiter oben bereits beschriebene Schnappfixierung zwischen der Stützstrebe und dem Gestell lässt sich insbesondere bei der Verwendung von Blech als Gestellbildner stanztechnisch einfach durch Ausmuldungen in den Endkanten der U-Schenkel herstellen. Diese Ausmuldungen dienen zur Einlage der Enden der Stützstrebe und damit zu einer gesicherten Lagepositionierung der Stützstrebe in ihrer gewünschten Sollstellung.

Bei den Lösungswegen nach den Ansprüchen 1 bis 13 ist die Stützstrebe unmittelbar am Gestell abgestützt. Die Ansprüche 14 bis 17 beinhalten eine Modifizierung, bei welcher die Stützstrebe mittelbar am Gestell fixiert ist. Die Stützstrebe soll auch aus Handhabungsgründen möglichst in einer festen Position parallel zur Haltestrebe gehalten sein. Das kann einerseits durch eine entsprechende Gestellausbildung, andererseits aber auch durch separate Halteelemente sichergestellt werden. Die Halteelemente sind baulich zweckmäßig als Haltescheiben ausgebildet, welche auf die Haltestrebe aufgefädelt und dadurch einfach in ihrer Sollstellung zur Haltestrebe positioniert sind. Die Lagefixierung der Stützstrebe nach ihrem Einfädeln in die Halteschlaufe kann auch an den Halteelementen bzw. Haltescheiben durch eine dann dort vorgesehene Schnappverbindung erfolgen.

Vorteilhaft kann auch die Stützstrebe umfänglich mit einem Kunststoff beschichtet sein. Die Beschichtung kann die Sicherheit der Lagefixierung der Stützstrebe am Gestell bzw. an der Haltestrebe begünstigen. Die Kunststoffschicht kann dabei aber auch dem Zweck dienen, Fertigungstoleranzen der Stützstrebe zu überbrükken, die ein Stanz-, Dreh- oder Schmiedeteil sein kann. Außerdem beeinflusst eine derartige Beschichtung die Reibung im System positiv. Anstelle einer Schnapp- ist auch eine Klemmverbindung denkbar.

Die Erfindung wird anhand der Figuren beispielsweise beschrieben. Es zeigen:
- Fig. 1: eine perspektivische Gesamtansicht einer durch den mittels einer Spannvorrichtung gespannten Ratschenzurrgurt zusammengehaltenen Ladung.
- Fig. 2: eine vergrößerte perspektivische Darstellung der konstruktiven Ausbildung der Festlegung des Fixierendes des Zurrbandes an der Spannvorrichtung.
- Fig. 3: eine modifizierte Ausführungsform der Festlegung des Fixierendes des Zurrbandes am Gestell analog Fig. 2.
- Fig. 4: eine Explosionsdarstellung der für die Festlegung des Fixierendes des Zurrbandes an der Spannvorrichtung wesentlichen Teile.
- Fig. 5: eine perspektivische Schnittdarstellung entsprechend den Schnittlinien V-V in den Fig. 2 und 3.

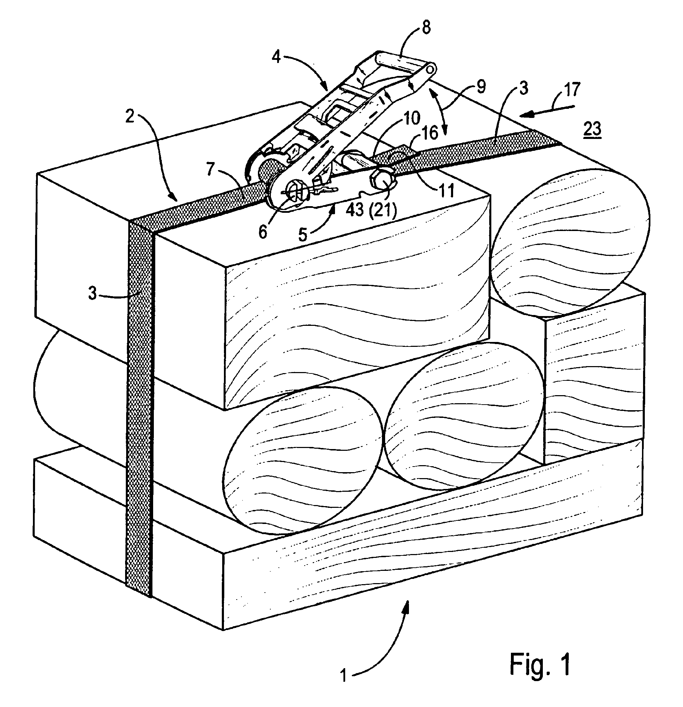

Der einen Stückstapel 1 umschlingende bzw. bündelnde Ratschenzurrgurt 2 besteht im Wesentlichen aus einem Zurrband 3 und einer das Zurrband 3 spannenden Spannvorrichtung 4 (Fig. 1). Die Spannvorrichtung 4 enthält ein Gestellchassis, welches nachstehend kurz als "Gestell" 5 bezeichnet ist. Das Gestell 5 lagert eine Wickeltrommel 6, von der indessen in Fig. 1 lediglich das über die Flanke des Gestells 5 hinausstehende Ende eines Lagerzapfens erkennbar ist. Dieses Ende symbolisiert die Wickeltrommel 6 zum Aufwickeln des Wickelendes 7 des Zurrbandes 3 in der Spannvorrichtung 4.

Das Drehmoment für die Aufwickeldrehung der Wickeltrommel 6 wird manuell durch einen Handhebel 8 eines hier nicht näher beschriebenen Ratschengetriebes erzeugt. Dieses Getriebe und seine Funktion sind im eingangs genannten Stand der Technik beschrieben. Der Handhebel 8 wird zur Drehmomentübertragung auf die Wickeltrommel 6 in Form von pumpenartigen Bewegungen in den Pfeilrichtungen 9 hin- und hergeschwenkt. Die Zurrdrehung der Wickeltrommel 6 wird durch das Hochschwenken des Handhebels 8 im Gegenuhrzeigersinn der Pfeilrichtungen 9 eingeleitet.

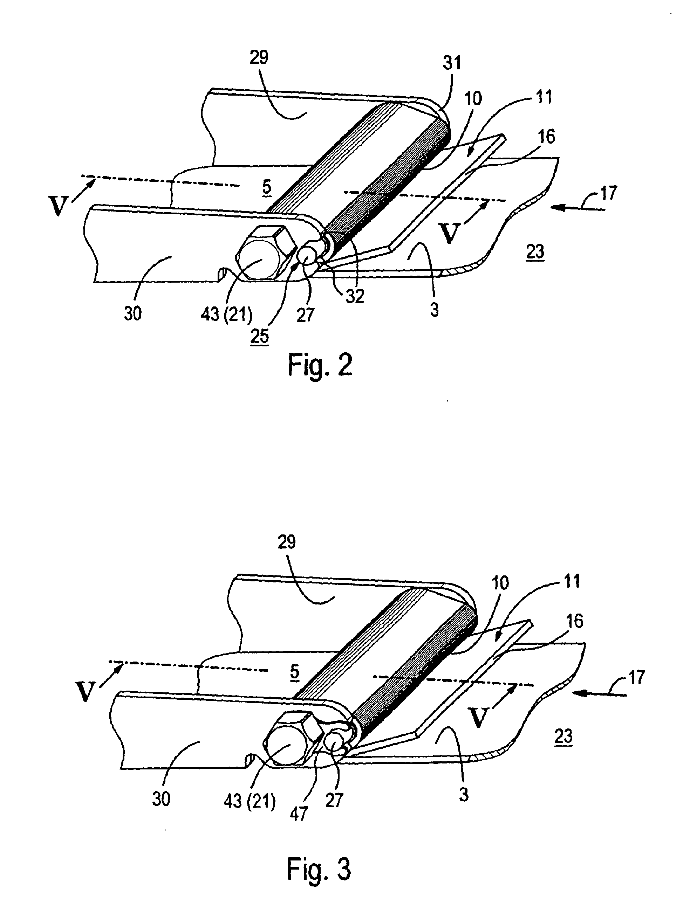

Das Fixierende 10 des Zurrbandes 3 ist an dem der Wickeltrommel 6 abgewandten Ende 11 des Gestells 5 der Spannvorrichtung 4 festgelegt. Die konstruktive Ausgestaltung dieser Festlegung ist Kern der nachstehend anhand der Fig. 2 bis 5 detailliert beschriebenen Erfindung.

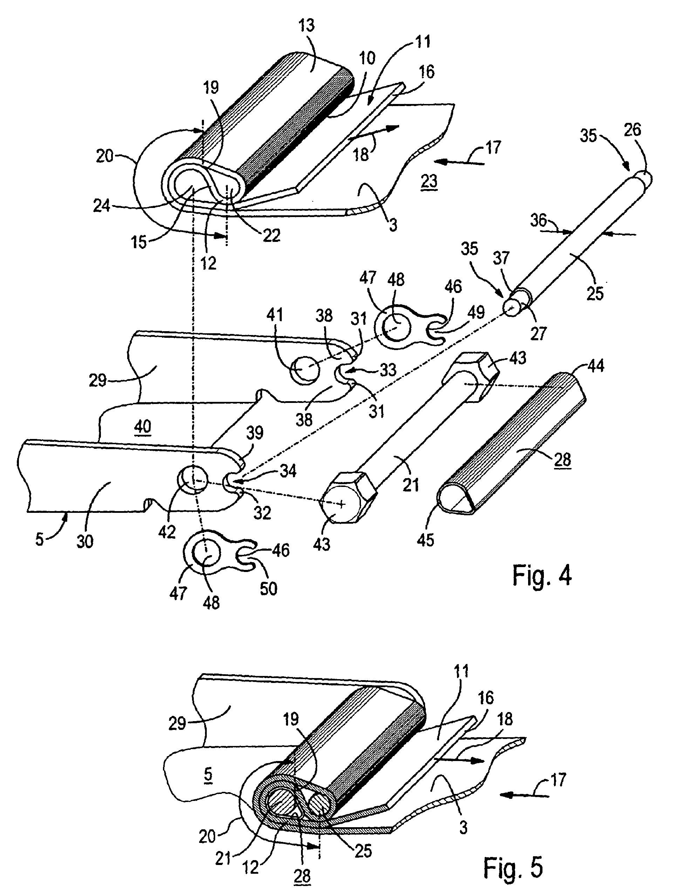

Das dem Fixierende 10 zugeordnete Endtrum 11 des Zurrbandes 3 ist in einem um 360° verlaufenden Schleifenbogen zu einer Schleife 12 (Fig. 4) umgelegt. Die obere Flanke der Schleife 12 ist durch das in Bandlängsrichtung 14 verlaufende Obertrum 13 und die unten liegende Flanke der Schleife 12 durch das Untertrum 15 gebildet. Die Schleife 12 bildet also in Bandlängsrichtung 14 wirkungsmäßig das Fixierende 10 des Zurrbandes 3, wenngleich sich das absolute Ende 16 des Zurrbandes 3 als Fortsetzung des Untertrums 15 in Gegenrichtung 18 zur Zurrrichtung 17 über die Schleife 12 hinaus erstreckt. Durch das Legen des Zurrbandes 3 zu einer Schleife 12 entsteht im Längsverlauf des Zurrbandes 3 angrenzend an die Schleife 12 ein gedoppelter Bandbereich 20.

Der an den Schleifenfuß 19 anschließende gedoppelte Bandbereich 20 umgreift mit seinem dem absoluten Ende 16 zugewandten Abschnitt im Gegenuhrzeigersinn die gestellfeste Haltestrebe 21, die sich quer zum Längsverlauf des Zurrbandes 3 erstreckt. Die Haltestrebe 21 ist ortsfest mit dem Gestell 5 verbunden, also integrierter Bestandteil des Gestells 5. Die beiden dem absoluten Ende 16 zugewandt an die Schleife 12 bzw. an das Schleifenauge 22 angrenzenden, den gedoppelten Bandbereich 20 bildenden Teile des Zurrbandes 3 beaufschlagen also den Umfang der Haltestrebe 21 auf deren der Zurrseite 23 abgewandter Umfangsfläche. In Montagestellung liegt die Haltestrebe 21 innerhalb des durch den gedoppelten Bandbereich 20 und die Schleife 12 gebildeten Doppelbandauges 24 ein.

Durch das Schleifenauge 22 ist eine Stützstrebe 25 hindurchgesteckt. Die Stützstrebe 25 ist wie die Haltestrebe 21 ein in Längsrichtung geradlinig ausgerichtetes Bauteil. Sowohl die Haltestrebe 21 als auch die Stützstrebe 25 sind nach Art einer Achse von vollzylindrischer Querschnittsform. Während die Haltestrebe 21 in montiertem Zustand ein integraler Bestandteil des weiter unten noch näher beschriebenen Gestells 5 der Spannvorrichtung 4 ist, bildet die Stützstrebe 25 ein separates, von der Spannvorrichtung 4 getrenntes Bauteil. In ihrer Funktionsposition liegt die Stützstrebe 25 innerhalb des Schleifenauges 22 ein. Mit ihren Enden 26,27 steht die Stützstrebe 25 aus dem Schleifenauge 22 beidseitig hinaus. Im Montagezustand liegt die Stützstrebe 25 mit diesen Enden 26,27 von der Zurrseite 23 her am Gestell 5 abgestützt an und umfänglich mit losem Spielsitz im Schleifenauge 22 ein. Unter der Zurrrichtung 17 entgegengerichteter Zurrspannung wird die Stützstrebe 25 durch das sie umgebende Schleifenauge 22 in Zurrrichtung 17 gegen das Gestell 5 gezogen und dadurch in ortsfester Distanz parallel zur Haltestrebe 21 gehalten.

Die parallel zur Stützstrebe 25 verlaufende Haltestrebe 21 ist von einer etwa hohlzylinderförmigen Umfassungshülse 28 mit losem Spielsitz umgeben. Während die Haltestrebe 21 beispielsweise einen Außendurchmesser von 13 mm aufweist, beträgt der Innendurchmesser der Umfassungshülse 28 14 mm bei einem Außendurchmesser von 16 mm. Die Wandstärke der aus Stahl bestehenden Umfassungshülse beträgt also 1 mm. Ihre hohlzylindrische Querschnittsform ist durch den großen Spielsitz ihrer Lagerung auf der Haltestrebe 21 unter Zurrspannung, nämlich unter dem vom gedoppelten Bandbereich 20 auf sie einwirkenden Umfangsdruck veränderbar. Unter der der Zurrrichtung 17 entgegengerichteten, vom gedoppelten Bandbereich 20 ausgeübten Zurrspannung nimmt die Umfassungshülse 28 die Querschnittsform etwa eines Tropfens an, wie das in Fig. 5 dargestellt ist.

Der Außenumfang der Umfassungshülse 28 ist beschichtet, insbesondere verzinkt und/oder chromatiert.

Der die Wickeltrommel 6 und den Handhebel 8 lagernde und die Haltestrebe 21 fixierende Gestellteil 5 ist ein im Querschnitt U-förmiges Bauteil, insbesondere ein U-förmig gebogenes Blechteil. Die vertikalen U-Schenkel 29,30 des Gestells 5 verlaufen in Zurrrichtung 17 und lagern zwischen sich die Wickeltrommel 6 und den Handhebel 8. Sie bilden von Hause aus mit ihren der Zurrrichtung 17 entgegengewandten Endkanten 31,32 die für die ortsfeste Distanzierung der Stützstrebe 25 von der Haltestrebe 21 notwendigen Distanzelemente. Jedenfalls ist das bei der Ausführungsform gemäß Fig. 2 der Fall, bei der die Stützstrebe 25 mit ihren beidseitig aus dem Schleifenauge 22 des gelegten Zurrbandes 3 hinausstehenden Enden 26,27 an den der Wickeltrommel 6 abgewandten Endkanten 31,32 der U-Schenkel 29,30 anliegt.

Bei den Ausführungsformen gemäß Fig. 2 bis 4 sind die Endkanten 31,32 der U-Schenkel 29,30 zur ortsfesten Einlage der Enden 26,27 der Stützstrebe 25 in Form von Ausmuldungen 33,34 ausgeschnitten bzw. ausgestanzt. Die in den Ausmuldungen 33,34 einliegenden Enden 26,27 der Stützstrebe 25 sind durch Lagerzapfen 35 gebildet, deren Außendurchmesser kleiner ist als die Querschnittsabmessung bzw. der Außendurchmesser 36 des in Montagestellung zwischen den U-Schenkeln 29,30 befindlichen Teiles der Stützstrebe 25. Dadurch weist die Stützstrebe 25 an ihren beiden die Lagerzapfen 35 tragenden Enden ausgeprägte Absätze 37 auf, die in Montagestellung stirnseitig an den Innenflanken der Enden 31,32 der U-Schenkel 29,30 anliegen. Dadurch distanzieren die beiden die Lagerzapfen 35 flankierenden Absätze 37 die Enden 31,32 der U-Schenkel 29,30 voneinander, die im Bereich ihrer Enden 31,32 nicht durch ein Querhaupt 40 stabilisiert sind. Dieses Querhaupt 40 bildet im der Wickeltrommel 6 zugewandten Zentralbereich des Gestells 5 als stabilisierendes Zentralelement gewissermaßen dessen Rückgrat.

Die Haltestrebe 21 ist ebenfalls als die Position der Enden 31,32 der U-Schenkel 29,30 stabilisierendes Gestellelement wirksam. Die Haltestrebe 21 ist nämlich innerhalb der die U-Schenkel 29,30 in deren den Endkanten 31,32 zugewandten Bereich innerhalb der Durchgangslöcher 41,42 verschraubt. Die Schraubenköpfe 43 beaufschlagen dabei die jeweiligen Außenflanken der U-Schenkel 29,30 in deren außerhalb des Querhauptes 40 freiliegenden Endbereich (Fig. 4). Mit stabilisierender Wirkung ist hier auch die Umfassungshülse 28 in nachstehend beschriebener Weise wirksam.

Die die Haltestrebe 21 umgebende Umfassungshülse 28 liegt in Montagestellung mit ihren Axialenden 44,45 (Fig. 4) an den Innenflanken der freien Enden 31,32 der U-Schenkel 29,30 des Gestells 5 derart an, dass diese Enden 31,32 insbesondere unter der auf das gespannte Zurrband 3 einwirkenden Zurrspannung auf Distanz voneinander gehalten werden. Diese Distanzhaltung ist eine weitere Funktion der die Haltestrebe 21 in Montagestellung umgebenden Umfassungshülse 28.

Um die an den Enden 31,32 der U-Schenkel 29,30 befindliche Stützposition der Stützstrebe 25 lagemäßig zu sichern bzw. zu perpetuieren, sind die Endkanten 31,32 der U-Schenkel 29,30 als Schnapper einer Schnappverbindung ausgebildet. Diese Schnappverbindung wird besonders durch die Ausmuldungen 33,34 an den Enden 31,32 der U-Schenkel 29,30 begünstigt. Auch andere Formen einer positionsmässigen Lagesicherung sind denkbar.

Bei der Ausführungsform gemäß Fig. 3 liegt die Stützstrebe 25 zusätzlich mit ihren beiden durch Lagerzapfen 35 gebildeten Enden 26,27 jeweils einer Haltescheibe 47 lagepositioniert an. Die Haltescheiben 47 sind mit ihren Lochdurchgängen 48 auf die Haltestreben 21 aufgefädelt. In Montagestellung liegen sie zwischen jeweils einem Axialende 44,45 der Umfassungshülse 28 und der Innenflanke eines U-Schenkels 29,30 des die Haltestrebe 21 fixierenden Gestells 5 ein.

Die Haltescheibe 47 ist zur ortsfesten Fixierung der Stützstrebe in radialer Richtung in Form von Ausmuldungen 49,50 ausgekehlt. Die Ausmuldungen 49,50 bilden analog den Ausmuldungen 33,34 an den Enden 31,32 der U-Schenkel 29,30 Funktionsteile einer Schnappverbindung, nämlich deren Schnapper.

Auch andere Formen einer Fixierung der Stützstrebe (25) am Gestell (5) sind denkbar, z. B. eine Haftschlussverbindung oder Klemmung in den Ausmuldungen (33,34) am Gestell (5) oder in den Ausmuldungen.

Die Stützstrebe (25) kann umfänglich beschichtet sein, was die Reibung im System positiv beeinflusst. Dadurch können auch Fertigungstoleranzen der Stützstrebe (25) ausgeglichen werden, wenn die Stützstrebe z. B. ein Stanz- oder Schmiedeteil oder ein Drehteil mit problematischer Oberflächenqualität ist. Auch kann die Kunststoffschicht die Fixierung der Stützstrebe (25) am Gestell (5) begünstigen.

### Bezugszeichenliste

- 1: Stückstapel
- 2: Ratschenzurrgurt
- 3: Zurrband
- 4: Spannvorrichtung
- 5: Gestell
- 6: Wickeltrommel
- 7: Wickelende
- 8: Handhebel
- 9: Pfeilrichtung
- 10: Fixierende d. Zurrbandes
- 11: Endtrum
- 12: Schleife
- 13: Obertrum
- 15: Untertrum
- 16: absolutes Ende
- 17: Zurrrichtung
- 18: Gegenrichtung
- 19: Schleifenfuß
- 20: gedopp. Bandbereich
- 21: Haltestrebe
- 22: Schleifenauge
- 23: Zurrseite
- 24: Doppelbandauge
- 25: Stützstrebe
- 26: Ende
- 27: Ende
- 28: Umfassungshülse
- 29: U-Schenkel
- 30: U-Schenkel
- 31: Endkante, Ende
- 32: Endkante, Ende
- 33: Ausmuldung
- 34: Ausmuldung
- 35: Lagerzapfen
- 36: Außendurchmesser
- 37: Absatz
- 38: Innenflanke
- 39: Innenflanke
- 40: Querhaupt
- 41: Durchgangsloch
- 42: Durchgangsloch
- 43: Schraubenkopf
- 44: Axialende
- 45: Axialende
- 46: Außenkante
- 47: Haltescheibe
- 48: Lochdurchgang
- 49: Ausmuldung
- 50: Ausmuldung

## Patentansprüche

1. Ratschenzurrgurt (2) mit
- einem um das zu verzurrende Gut (1) herumlegbaren Zurrband (3) und
- einer Spannvorrichtung (4) für das Zurrband (3), welche Spannvorrichtung (4) enthält
-- ein Gestell (5) und
-- eine im Gestell (5) insbesondere manuell angetrieben drehbare Wickeltrommel (6) zum Aufwickeln des Zurrbandes (3),
wobei
- das der Wickeltrommel (6) abgewandte Fixierende (10) des Zurrbandes (3) in Form einer Schleife (12) eine parallel zur Achse der Wickeltrommel ausgerichtete gestellfeste Haltestrebe (21) umgreift,
- das Schleifenauge (22) der Schleife (12) von einer etwa parallel zur Haltestrebe (21) verlaufenden Stützstrebe (25) durchsetzt ist und
- das an den Schleifenfuß (19) anschließende Endtrum (11) des Zurrbandes (3) seitens der Stützstrebe (25) zwischen Schleife (12) und zu spannendem Zurrband (3) klemmfixiert ist,
**dadurch gekennzeichnet,**
- **dass** die Stützstrebe (25) als separates, von der Spannvorrichtung (4) getrenntes Bauteil mit ihren beiden Enden (26,27) aus dem Schleifenauge (22) hinaussteht und auf der der Wickeltrommel (6) gegenüberliegenden Seite an den Endkanten (31,32) des Gestells (5) abgestützt anliegt und zu der Haltestrebe (21) eine veränderbare Distanz einnimmt.

2. Ratschenzurrgurt nach Anspruch 1,
**dadurch gekennzeichnet,**
**dass** aus dem Gestell (5) im Bereich der Endkanten (31,32) Ausmuldungen (33,34) ausgeschnitten bzw. ausgestanzt sind zur formschlüssigen Aufnahme der Stützstrebe (25).

3. Ratschenzurrgurt nach Anspruch 1 oder 2,
**dadurch gekennzeichnet,**
**dass** die Stützstrebe (25) umfänglich mit losem Spielsitz im Schleifenauge (22) einliegt und unter Zurrspannung eine Position einnimmt, die durch die Dicke des Zurrbandes (3) bestimmt wird und dadurch eine Klemmung des Zurrbandes (3) bewirkt.

4. Ratschenzurrgurt nach Anspruch 1,2 oder 3,
**dadurch gekennzeichnet,**
**dass** die Haltestrebe (21) von einer etwa hohlzylinderförmigen Umfassungshülse (28) mit losem Spielsitz umgeben ist.

5. Ratschenzurrgurt nach Anspruch 4,
**dadurch gekennzeichnet,**
**dass** die Querschnittsform der Umfassungshülse (28) unter Einfluss des unter Zurrspannung vom gedoppelten Bandbereich (20) ausgeübten Umfangsdruckes veränderbar ist.

6. Ratschenzurrgurt nach Anspruch 5,
**dadurch gekennzeichnet,**
**dass** die Querschnittsform der Umfassungshülse (28) unter Zurrspannung etwa die Umrissform eines Tropfens aufweist.

7. Ratschenzurrgurt nach einem der Ansprüche 4 bis 6,
**dadurch gekennzeichnet,**
**dass** die Umfassungshülse (28) eine Stahlhülse ist.

8. Ratschenzurrgurt nach Anspruch 7,
**dadurch gekennzeichnet,**
**dass** der Außenumfang der Umfassungshülse (28) beschichtet, insbesondere verzinkt und/oder chromatiert ist.

9. Ratschenzurrgurt nach einem der Ansprüche 1 bis 8,
**dadurch gekennzeichnet,**
• **dass** das die Wickeltrommel (6) lagernde und die Haltestrebe fixierende Gestell (5) ein im Querschnitt U-förmiges Bauteil, insbesondere ein U-förmig gebogenes Blechteil ist, dessen vertikale U-Schenkel (29,30) zwischen sich die Wickeltrommel (6) lagern und die Haltestrebe (21) fixieren und
• **dass** die Stützstrebe (25) mit ihren beidseitig aus dem Schleifenauge (22) hinausstehenden Enden (26,27) an den der Wickeltrommel (6) abgewandten Endkanten (31,32) der U-Schenkel (29,30) anliegt.

10. Ratschenzurrgurt nach Anspruch 9,
**gekennzeichnet durch**
jeweils eine Ausmuldung (33,34) der Endkanten (31,32) der U-Schenkel (29,30) zur ortsfesten Einlage der Enden (26,27) der Stützstrebe (25).

11. Ratschenzurrgurt nach Anspruch 10,
**dadurch gekennzeichnet,**
**dass** die einliegenden Enden (26,27) der Stützstrebe (25) durch Lagerzapfen gebildet sind, deren Querschnittsabmessungen, insbesondere Außendurchmesser, kleiner sind als die Querschnittsabmessung (36) des zwischen den U-Schenkeln (29,30) befindlichen Teils der Stützstrebe (25).

12. Ratschenzurrgurt nach einem der Ansprüche 1 bis 11,
**gekennzeichnet durch**
eine Formverschluss- oder Haftschlussverbindung, insbesondere eine Schnappverbindung zwischen mindestens einem Ende (26,27) der Stützstrebe (25) und dem anliegenden Gestell (5), insbesondere den der Wickeltrommel (6) abgewandten Endkanten (31,32) der U-Schenkel (29,30).

13. Ratschenzurrgurt nach einem der Ansprüche 4 bis 12,
**dadurch gekennzeichnet,**
**dass** die die Haltestrebe (21) umgebende Umfassungshülse (28) mit ihren Axialenden (44,45) an den U-Schenkeln (29,30) des die Haltestrebe (21) fixierenden Gestells (5) anliegt derart, dass sie insbesondere unter Zurrspannung die U-Schenkel (29,30) auf Distanz voneinander hält.

14. Ratschenzurrgurt (2) mit
- einem um das zu verzurrende Gut (1) herumlegbaren Zurrband (3) und
- einer Spannvorrichtung (4) für das Zurrband (3), welche Spannvorrichtung (4) enthält
-- ein Gestell (5) und
-- eine im Gestell (5) insbesondere manuell angetrieben drehbare Wickeltrommel (6) zum Aufwickeln des Zurrbandes (3),
wobei
- das der Wickeltrommel (6) abgewandte Fixierende (10) des Zurrbandes (3) in Form einer Schleife (12) eine parallel zur Achse der Wickeltrommel ausgerichtete gestellfeste Haltestrebe (21) umgreift,
- das Schleifenauge (22) der Schleife (12) von einer etwa parallel zur Haltestrebe (21) verlaufenden Stützstrebe (25) durchsetzt ist und
- das an den Schleifenfuß (19) anschließende Endtrum (11) des Zurrbandes (3) seitens der Stützstrebe (25) zwischen Schleife (12) und zu spannendem Zurrband (3) klemmfixiert ist,
**dadurch gekennzeichnet,**
**dass** die Stützstrebe (25) als separates von der Spannvorrichtung (4) getrenntes Bauteil mit ihren beiden Enden (26,27) aus dem Schleifenauge (22) hinaussteht und auf der der Wickeltrommel (6) gegenüberliegenden Seite des Gestells (5) angeordnet ist und mittels eines gesonderten Halteelements, insbesondere mittels einer an der Haltestrebe (21) fixierten Haltescheibe (47), mit der Haltestrebe (21) verbunden ist.

15. Ratschenzurrgurt nach Anspruch 14,
**dadurch gekennzeichnet,**
**dass** das Halteelement, insbesondere die Haltescheibe (47) zwischen einem Axialende (44,45) der Umfassungshülse (28) und einem U-Schenkel (29,30) des die Haltestrebe fixierenden Gestells (5) einliegt.

16. Ratschenzurrgurt nach Anspruch 14 oder 15,
**dadurch gekennzeichnet,**
**dass** das von der Stützstrebe (25) beaufschlagte Teil des Halteelements, insbesondere der Haltescheibe (47) zur ortsfesten Einlage eines Stützstrebenendes (26,27) in zur Haltestrebe (21) radialer Richtung ausgekehlt (Ausmuldung 49,50) ist.

17. Ratschenzurrgurt nach einem der Ansprüche 14 bis 16,
**dadurch gekennzeichnet,**
**dass** die Ausmuldung (49,50) Teil einer Schnappverbindung ist.

18. Ratschenzurrgurt nach einem der Ansprüche 1 bis 17,
**dadurch gekennzeichnet,**
**dass** die Stützstrebe (25) umfänglich mit einem Kunststoff beschichtet ist.

## Claims

1. A ratcheted lashing belt (2) with
- a lashing strap (3) capable of being passed around the material (1) to be lashed, and
- a tightening device (4) for the lashing strap (3), which tightening device (4) contains
-- a frame (5), and
-- a winding drum (6) driven, in particular manually, in the frame (5) in order to wind up the lashing strap (3),
wherein
- the fixing end (10) of the lashing strap (3) remote from the winding drum (6) engages in the form of a loop (12) around a retention strut (21) which is orientated parallel to the axis of the winding drum and which is rigid with the frame,
- a support strut (25) extending substantially parallel to the retention strut (21) passes through the eyelet (22) of the loop (12), and
- the end run (11) of the lashing strap (3) adjoining the loop base (19) is fixed in a clamped manner at the side of the support strut (25) between the loop (12) and the lashing strap (3) to be tightened,
**characterized in that**
- the support strut (25) projects, in the form of a separate component which is separate from the tightening device (4), with its two ends (26, 27) out of the eyelet (22) of the loop and rests in a supported manner on the end edges (31, 32) of the frame (5) on the side opposite the winding drum (6) and is at a variable distance from the retention strut (21).

2. A ratcheted lashing belt according to Claim 1, **characterized in that** recesses (33, 34) are cut or punched out of the frame (5) in the region of the end edges (31, 32) in order to receive the support strut (25) in a positively locking manner.

3. A ratcheted lashing belt according to Claim 1 or 2, **characterized in that** the support strut (25) is arranged in the eyelet (22) of the loop with loose clearance fitting on the periphery and, when tightened in a lashed manner, occupies a position which is determined by the thickness of the lashing strap (3) and, as a result, causes a tightening of the lashing strap (3).

4. A ratcheted lashing belt according to Claim 1, 2 or 3, **characterized in that** the retention strut (21) is surrounded, with a loose clearance fitting, by an encasing sleeve (28) substantially in the form of a hollow cylinder.

5. A ratcheted lashing belt according to Claim 4, **characterized in that** the cross-sectional shape of the encasing sleeve (28) is variable under the influence of the peripheral pressure exerted by the doubled strap region (20) when tightened in a lashed manner.

6. A ratcheted lashing belt according to Claim 5, **characterized in that** the cross-sectional shape of the encasing sleeve (28) has an outline substantially in the shape of a drop.

7. A ratcheted lashing belt according to any one of Claims 4 to 6, **characterized in that** the encasing sleeve (28) is a steel sleeve.

8. A ratcheted lashing belt according to Claim 7, **characterized in that** the external periphery of the encasing sleeve (28) is coated, and in particular zinc-coated and/or chromated.

9. A ratcheted lashing belt according to any one of Claims 1 to 8, **characterized in that**
• the frame (5) supporting the winding drum (6) and fixing the retention strut is a component U-shaped in cross-section, in particular a sheet-metal part bent into a U-shape, the vertical legs (29, 30) of the U of which support the winding drum (6) between themselves and fix the retention strut (21), and
• the support strut (25) rests with its ends (26, 27) projecting out of the eyelet (22) of the loop on both sides at the end edges (31, 32) of the legs (29, 30) of the U remote from the winding drum (6).

10. A ratcheted lashing belt according to Claim 9, **characterized by** a recess (33, 34) of the end edges (31, 32) of the legs (29, 30) of the U in each case for the stationary arrangement of the ends (26, 27) of the support strut (25) on the inside.

11. A ratcheted lashing belt according to Claim 10, **characterized in that** the ends (26, 27) of the support strut (25) which are situated on the inside are formed by bearing journals, of which the cross-sectional dimensions, in particular the external diameter, are smaller than the cross-sectional dimension (36) of the part of the support strut (25) which is situated between the legs (29, 30) of the U.

12. A ratcheted lashing belt according to any one of Claims 1 to 11, **characterized by** a connexion with positive or non-positive locking, in particular a snap connexion between at least one end (26, 27) of the support strut (25) and the adjacent frame (5), in particular the end edges (31, 32) of the legs (29, 30) of the U remote from the winding drum (6).

13. A ratcheted lashing belt according to any one of Claims 4 to 12, **characterized in that** the encasing sleeve (28) surrounding the retention strut (21) rests with its axial ends (44, 45) against the legs (29, 30) of the U of the frame (5) fixing the retention strut (21), in such a way that it holds the legs (29, 30) of the U at a distance from each other, in particular when tightened in a lashed manner.

14. A ratcheted lashing belt (2) with
- a lashing strap (3) capable of being passed around the material (1) to be lashed, and
- a tightening device (4) for the lashing strap (3), which tightening device (4) contains
-- a frame (5), and
-- a winding drum (6) driven, in particular manually, in the frame (5) in order to wind up the lashing strap (3),
wherein
- the fixing end (10) of the lashing strap (3) remote from the winding drum (6) engages in the form of a loop (12) around a retention strut (21) which is orientated parallel to the axis of the winding drum and which is rigid with the frame,
- a support strut (25) extending substantially parallel to the retention strut (21) passes through the eyelet (22) of the loop (12), and
- the end run (11) of the lashing strap (3) adjoining the loop base (19) is fixed in a clamped manner at the side of the support strut (25) between the loop (12) and the lashing strap (3) to be tightened,
**characterized in that**
the support strut (25) projects, in the form of a separate component which is separate from the tightening device (4), with its two ends (26, 27) out of the eyelet (22) of the loop and is arranged on the side of the frame (5) opposite the winding drum (6) and is connected to the retention strut (21) by means of a separate retention element, in particular by means of a retention disc (47) fixed to the retention strut (21).

15. A ratcheted lashing belt according to Claim 14, **characterized in that** the retention element, in particular the retention disc (47), is situated between an axial end (44, 45) of the encasing sleeve (28) and a leg (29, 30) of the U of the frame (5) fixing the retention strut.

16. A ratcheted lashing belt according to Claim 14 or 15, **characterized in that** the part of the retention element, in particular the retention disc (47), acted upon by the support strut (25), for the stationary arrangement of an end (26, 27) of the support strut on the inside is channelled (recess 49, 50) in a direction radial to the retention strut (21).

17. A ratcheted lashing belt according to any one of Claims 14 to 16, **characterized in that** the recess (49, 50) is part of a snap connexion.

18. A ratcheted lashing belt according to any one of Claims 1 to 17, **characterized in that** the support strut (25) is coated on the periphery with a plastics material.

## Revendications

1. Ensemble de sangle d'amarrage ou de serrage à tendeur à cliquet (2), comprenant
- une bande d'amarrage (3) pouvant être appliquée autour de la marchandise (1) à amarrer ou enserrer, et
- un dispositif tendeur (4) pour la bande d'amarrage (3), ce dispositif tendeur (4) englobant
- un cadre-support (5) et
- un tambour d'enroulement (6) rotatif, notamment par entraînement manuel, dans le cadre-support (5), pour enrouler la bande d'amarrage (3),
ensemble dans lequel
- l'extrémité de fixation (10) de la bande d'amarrage (3), sous la forme d'une boucle (12) et opposée à celle du tambour d'enroulement (6), est appliquée autour d'une broche de maintien (21) fixe avec le cadre-support et orientée parallèlement à l'axe du tambour d'enroulement (6),
- l'anneau de boucle (22) de la boucle (12) est traversé par une broche de retenue (25) s'étendant sensiblement parallèlement à la broche de maintien (21), et
- le brin terminal (11) de la bande d'amarrage (3) se raccordant au pied de boucle (19) est fixé par serrage, du côté de la broche de retenue (25), entre la boucle (12) et la bande d'amarrage (3) à tendre,
**caractérisé en ce que**
- la broche de retenue (25), sous forme de pièce distincte, séparée du dispositif tendeur (4), fait saillie avec ses deux extrémités (26, 27) hors de l'anneau de boucle (22) et s'applique en appui, du côté opposé à celui où se trouve le tambour d'enroulement (6), sur les bords d'extrémité (31, 32) du cadre-support (5), et s'établit à une distance pouvant être variable de la broche de maintien (21).

2. Ensemble de sangle d'amarrage à tendeur à cliquet selon la revendication 1,
**caractérisé en ce que** dans le cadre-support (5), au niveau de la zone des bords d'extrémité (31, 32), sont découpées ou usinées par matriçage, des encoches (33, 34) pour assurer la réception de la broche de retenue (25), par complémentarité de formes.

3. Ensemble de sangle d'amarrage à tendeur à cliquet selon la revendication 1 ou 2,
**caractérisé en ce que** la broche de retenue (25) s'applique avec un ajustement libre à jeu en périphérie dans l'anneau de boucle (22), et, sous l'effet de la tension d'amarrage, prend une position qui est déterminée par l'épaisseur de la bande d'amarrage (3) en produisant ainsi un serrage de la bande d'amarrage (3).

4. Ensemble de sangle d'amarrage à tendeur à cliquet selon la revendication 1, 2 ou 3,
**caractérisé en ce que** la broche de maintien (21) est entourée avec un ajustement libre à jeu, par un fourreau de gainage (28) d'une forme sensiblement cylindrique creuse.

5. Ensemble de sangle d'amarrage à tendeur à cliquet selon la revendication 4,
**caractérisé en ce que** la forme de section transversale du fourreau de gainage (28) peut être modifiée sous l'influence de la pression périphérique exercée par la zone de bande doublée (20), sous tension d'amarrage.

6. Ensemble de sangle d'amarrage à tendeur à cliquet selon la revendication 5,
**caractérisé en ce que** la forme de section transversale du fourreau de gainage (28) présente, sous tension d'amarrage, sensiblement un tracé périphérique en forme de goutte.

7. Ensemble de sangle d'amarrage à tendeur à cliquet selon l'une des revendications 4 à 6,
**caractérisé en ce que** le fourreau de gainage (28) est un fourreau en acier.

8. Ensemble de sangle d'amarrage à tendeur à cliquet selon la revendication 7,
**caractérisé en ce que** la périphérie extérieure du fourreau de gainage (28) est revêtue, notamment galvanisée et/ou chromatisée.

9. Ensemble de sangle d'amarrage à tendeur à cliquet selon l'une des revendications 1 à 8,
**caractérisé**
• **en ce que** le cadre-support (5) assurant le montage du tambour d'enroulement (6) et la fixation de la broche de maintien est une pièce de section transversale en forme de U, notamment une pièce de tôle pliée en forme de U, dont les ailes verticales (29, 30) du U assurent entre elles le montage du tambour d'enroulement (6) et la fixation de la broche de maintien (21), et
• **en ce que** la broche de retenue (25) s'appuie, avec ses deux extrémités (26, 27) faisant saillie des deux côtés hors de l'anneau de boucle (22), sur les bords d'extrémité (31, 32) des ailes de U (29, 30), qui sont opposés à ceux où se trouve le tambour d'enroulement (6).

10. Ensemble de sangle d'amarrage à tendeur à cliquet selon la revendication 9,
**caractérisé par** une encoche (33, 34) respective dans chacun des bords d'extrémité (31, 32) des ailes de U (29, 30), pour l'insertion en position fixe des extrémités (26, 27) de la broche de retenue (25).

11. Ensemble de sangle d'amarrage à tendeur à cliquet selon la revendication 10,
**caractérisé en ce que** les extrémités (26, 27) insérées de la broche de retenue (25), sont formées par des tourillons de palier dont les dimensions de section transversale, notamment, le diamètre extérieur, sont plus petites que la dimension de section transversale (36) de la partie de la broche de retenue (25) située entre les ailes de U (29, 30).

12. Ensemble de sangle d'amarrage à tendeur à cliquet selon l'une des revendications 1 à 11,
**caractérisé par** une liaison par complémentarité de formes ou par adhérence, notamment une liaison par encliquetage, entre au moins une extrémité (26, 27) de la broche de retenue (25) et le cadre-support (5) adjacent, notamment les bords d'extrémité (31, 32) des ailes de U (29, 30), opposés à ceux où se trouve le tambour d'enroulement (6).

13. Ensemble de sangle d'amarrage à tendeur à cliquet selon l'une des revendications 4 à 12,
**caractérisé en ce que** le fourreau de gainage (28) entourant la broche de maintien (21) s'appuie, avec ses extrémités axiales (44, 45), sur les ailes de U (29, 30) du cadre-support (5) assurant la fixation de la broche de maintien (21), de façon à maintenir les ailes de U (29, 30) à distance l'une de l'autre, notamment sous tension d'amarrage.

14. Ensemble de sangle d'amarrage ou de serrage à tendeur à cliquet (2), comprenant
- une bande d'amarrage (3) pouvant être appliquée autour de la marchandise (1) à amarrer ou enserrer, et
- un dispositif tendeur (4) pour la bande d'amarrage (3), ce dispositif tendeur (4) englobant
- un cadre-support (5) et
- un tambour d'enroulement (6) rotatif, notamment par entraînement manuel, dans le cadre-support (5), pour enrouler la bande d'amarrage (3),
ensemble dans lequel
- l'extrémité de fixation (10) de la bande d'amarrage (3), sous la forme d'une boucle (12) et opposée à celle du tambour d'enroulement (6), est appliquée autour d'une broche de maintien (21) fixe avec le cadre-support et orientée parallèlement à l'axe du tambour d'enroulement (6),
- l'anneau de boucle (22) de la boucle (12) est traversé par une broche de retenue (25) s'étendant sensiblement parallèlement à la broche de maintien (21), et
- le brin terminal (11) de la bande d'amarrage (3) se raccordant au pied de boucle (19) est fixé par serrage, du côté de la broche de retenue (25), entre la boucle (12) et la bande d'amarrage (3) à tendre,
**caractérisé en ce que**
la broche de retenue (25), sous forme de pièce distincte, séparée du dispositif tendeur (4), fait saillie avec ses deux extrémités (26, 27) hors de l'anneau de boucle (22) et est agencée du côté du cadre-support (5), qui est opposé à celui où se trouve le tambour d'enroulement (6), et est reliée à la broche de maintien (21) au moyen d'un élément de support distinct, notamment au moyen d'une plaquette de support (47) fixée à la broche de maintien (21).

15. Ensemble de sangle d'amarrage à tendeur à cliquet selon la revendication 14,
**caractérisé en ce que** l'élément de support, notamment la plaquette de support (47), est inséré entre une extrémité axiale (44, 45) du fourreau de gainage (28) et une aile de U (29, 30) du cadre-support (5) assurant la fixation de la broche de maintien.

16. Ensemble de sangle d'amarrage à tendeur à cliquet selon la revendication 14 ou 15,
**caractérisé en ce que** la partie de l'élément de support, notamment de la plaquette de support (47), qui est sollicitée par la broche de retenue (25), est évidée (encoche 49, 50) en direction radiale de la broche de maintien (21), pour l'insertion en position fixe d'une extrémité (26, 27) de la broche de retenue.

17. Ensemble de sangle d'amarrage à tendeur à cliquet selon l'une des revendications 14 à 16,
**caractérisé en ce que** l'encoche (49, 50) fait partie d'une liaison par encliquetage.

18. Ensemble de sangle d'amarrage à tendeur à cliquet selon l'une des revendications 1 à 17,
**caractérisé en ce que** la broche de retenue (25) est revêtue d'une matière plastique sur sa périphérie.
